# EUROPEAN PATENT SPECIFICATION

(11) **EP 1 574 129 B1**
(45) Date of publication and mention of the grant of the patent: **10.11.2010**
(21) Application number: 03780946.4
(22) Date of filing: 19.12.2003
(51) Int. Cl.: A01K 1/015

(54) **FLOOR MAT AND SMALL ANIMAL REARING CAGE**
BODENMATTE UND KÄFIG ZUR KLEINTIERZUCHT
TAPIS DE SOL ET CAGE D'ELEVAGE POUR PETIT ANIMAL

(30) Priority: 20.12.2002 JP 2002369202; 26.05.2003 JP 2003148135
(43) Date of publication of application: 14.09.2005
(73) Proprietor: Globe, Inc., Bunkyo-ku, Tokyo 113-0033 (JP)
(72) Inventor: IWAKI, Takamasa, Nerima-ku, Tokyo 176-0022 (JP); NISHIMURA, Takao, Chiba, 278-0054 (JP)
(74) Representative: Merkle, Gebhard
(86) International application number: PCT/JP2003/016372
(87) International publication number: WO 2004/056175

(56) References cited:
- JP-A- 2000 333 546
- JP-A- 2001 120 094
- JP-Y2- 4 038 701
- US-A- 4 169 428
- US-A- 4 690 100
- US-A- 5 148 768
- US-A- 5 939 088

## Description

### FIELD OF THE INVENTION

The present invention relates to a floor mat which is used for rearing small animals such as a mouse and a rat, and to a small animal rearing cage for rearing such small animals.

### RELATED ART

Small animals including a squirrel, a hamster, a rat, a mouse, and a rabbit are conventionally housed and reared in a small animal rearing cage as a pet or for a laboratory use. The cage is provided with a food feeder and water feeder, and the animals eat and evacuate in the cage. The cage is also provided with a floor formed with a plastic or metallic plate or a net, and a floor mat is laid thereon. The floor mat functions either as an excretion disposal material to absorb and retain the excrement of small animals and as their bedding material.

Materials such as wood chips, paper chips, ground com cobs, recycled non-woven fabrics have conventionally been sold and used as a floor mat. Among these, sawdust or wood, or paper chips are the most used material as a floor mat. Sawdust or chips absorb excrement of small animals, however, have no deodorization property that removes offensive odor substances such as ammonia. In order to avoid generation of offensive odor, the floor mat is required to be changed to new one frequently, The problem is that less frequent changing of the mat leads to generate offensive odor. Sawdust or chips, as being an aggregation of small pieces having a size of 1 to 2 cm or less in every direction, tend to generate dust.

US 5,148,768 discloses a pet house construction including a front entrance, with a plurality of drawer-like containers mounted between an upper and lower floor of the house structure.

US 4,169,428 discloses a sleeping bag for pets which is formed from a multiple ply padded sheet of deeply quilted material which is normally folded along its central portion with opposite halves in overlying relationship to form lower and upper layers and with the edge portions of each half in alignment with each other.

In order to solve aforementioned problems, a floor mat comprising a cellulose material having a metal supported thereto has been proposed to control the generation of offensive odor. (Japanese Patent Application Laid-Open No. 2002-209465) The floor mat is composed of metal supported cellulose that is obtained by having a metal that binds to offensive odor substances such as hydrogen sulfide or ammonia supported to the cellulose fiber. The offensive odor substance, such as ammonia originally generating from excrement of small animals, binds to a metal that is supported by cellulose, and the generation of offensive odor is restrained In low level.

The floor mat mentioned above is formed with a cotton-like substance or small pieces having a size of several centimeters in every direction, and are laid In large numbers in a small animal rearing cage. As a result, a large number of cotton-like substances laid in the cage give larger surface area as a whole and thus efficient absorption of urine can be obtained. In the case where a floor mat with a certain thickness is laid in the cage, small animals can use the mat as a material for their bedding or nesting. Small animals can thus be bred without having nests provided in the cage,

When the small animals move around the cage, however, the floor mat formed with many small substances having a size of only several centimeters in every direction are spread anywhere around the cage. This also spreads excrement to clean area of the mat and thus leads to deterioration of rearing environment. In order to breed small animals by using a floor mat as their nesting materials in the cage, the mat is required to be added or other mats to be provided. Particularly when a small animal rearing cage is installed at a place where air-conditioning is conducted, sufficient amount of floor mat is required to be laid in order to provide protection against the wind from the air-conditioning machine that tends to cause the body temperature drop of baby animals, Further, according to a guideline on animal experiments developed by ILAR (Institute of Animal Resources), the floor mat is recommended to be changed every day or once a week, however, the floor mat shown above cannot be reused and thus causes higher costs for purchasing and disposal of the mat and yields unfavorable environmental effects.

### SUMMARY OF THE INVENTION

In view of the foregoing, an object of the present invention is to provide a floor mat or a small animal rearing cage in which small animals are reared under hygienic condition and the necessity to replenish the floor mat upon breeding is eliminated.

In order to overcome the foregolng problems, the present invention found that, not an aggregation of a plurality of small objects but a sheet type soft floor mat having a size of at least no less than 10 cm in side length is appropriate for the small animal rearing, particularly for reproduction, and completed the invention as such. The present invention also found that it is preferable that such sheet type soft floor mat is provided with a function to deodorize excrement and urine, and further found that the manner to lay the sheet has great effects on the rearing environment of small animals and completed the invention as such.

Specifically, the present invention provides:

A floor mat laid in a small animals rearing cage for housing and rearing small animals, the floor mat is a sheet comprising a temperature holding property to a degree that can keep the body temperature of the small animals, a flexibility to a degree that can wrap the body of the small animals, and a size that covers at least the entire abdomen of the small animals wherein the sheet is formed of an improved cellulose fabric comprising cellulose having carboxyl groups chemically bound thereto, wherein the cellulose having carboxyl groups chemically bound thereto is formed in a shape of sheet.

According to the invention, the sheet type floor mat laid in the small animals rearing cage has a sufficient size to cover the entire body of the target small animals when the animals couch on the mat, and thus the frequent movement of the animals does not cause the mat to be moved along the movement of the animals. For this reason, the mat avoids the excrement to be spread around the whole floor and therefore avoid the deterioration of the rearing environment.

The aforementioned floor mat is provided with a sufficient temperature holding property and flexibility so that the small animals can wrap themselves therein to keep their body temperature. This makes the bleeding of the small animals easier because the parents or children can make themselves wrapped in the mat even without having any nest box or a floor mat for bleeding in order to keep their body temperature at a necessary level and to avoid the wind blowing out from the air conditioning machine. The animals when wrapped in the mat can also obtain a dark hiding place and a peace of mind to release the stress and thus able to achieve higher reproductive performance.

Additionally, the sheet type floor mat shown above generates extremely fewer dusts than the floor mats constituted by sawdust or chips and hardly adhered to the body surface of the baby animals that are just bom and have no hair. This prevents parents from eating their baby animals who are adhered with the pieces of floor mat which are recognized as a foreign object. The sheet type floor mat has a degree of flexibility such that it can be bent flexibly to wrap the small animals therein and is freely bent to form folds in the rearing cage. The folds trap the excrement of the animals and prevent the excrement to be spread over the whole floor mat in the cage even when the animals move around.

As for the aforementioned mat, it is preferable to use a fabric having a size of at least one cm in side length in every direction.

The floor mat comprises a size for covering at least the abdomen and the head of the small animals.

The floor mat should have a size to cover the abdomen of the small animals, however, it is preferable to have larger size with capacity to wrap In not only their abdomen but also up to their head so that they can hide almost all part of their body when they couch upon the mat. The mat prevents animals from being exposed to light and wind except their tails and thus provides them with a comfortable living environment.

The floor mat further comprises a water absorption property and deodorization property.

The floor mat is provided with water absorption and deodorization property in addition to the temperature holding property and flexibility, so that the mat can absorb water content of excrement of the small animals and can also remove the offensive odor generated by the excrement, This keeps the small animal rearing cage in a hygienic environment without generating offensive odor for a long period of time and thus the mat can be changed less frequently.

The "deodorization property" In this specification means to be provided with one or both of the odor elimination property or/and odor removal property. Wherein "odor elimination property" means to chemically eliminate the offensive odor substance by having the target substance reacted with other substances or by decomposing the target substance into other substances; whereas "odor removal property" means to physically remove the odor substance by way of absorption or exhaustion.

The floor mat further comprises a tearing resistance.

The floor mat comprises strength to a degree that cannot be torn by being pulled by hands. The mat thus ensures longer use as it may not be damaged by the small animals moving around the cage or biting the mat several times. As the mat is hard to be torn off, the excrement adhered to the mat can be easily brushed off. The mat can also be washed for further use and thereby reducing the total amount of waste disposal.

The "tearing resistance" in this specification means a property that is hard to be torn by small animals moving around the cage or having a few biting of the mat. Owing to this property, the mat is hardly torn Into small pieces, lumps or dusts even when the small animals bite or pull on the floor mat 60.

The floor mat comprises an improved cellulose fabric wherein carboxyl group-introduced cellulose is formed in a shape of sheet.

The floor mat is provided with temperature retaining property, flexibility, water absorption property, deodorization property and tearing resistance property and includes a fabric supported by the known deodorization substance. The improved cellulose fabric described is used because it is provided with temperature retaining property, flexibility, water absorption property, and deodorization property, and is hardly bitten to be torn by small animals particularly by mouse and can be washed by washing machines. Since the improved cellulose fabric obtains the deodorization property by way of an introduction of the carboxyl group, the present mat is safer for the animals even when they eat the mat when compared with the case in which the fiber is supported by a metal as a deodorant agent.

A small animal rearing cage for housing and rearing small animals, the small animal rearing cage comprising: a rearing box having a floor and a wall provided at a circumference of the floor; and a floor mat formed with a sheet having a temperature holding property to a degree that can keep the body temperature of the small animals, a flexibility to a degree that can wrap the body of the small animals, and a size that covers at least the entire abdomen of the small animals wherein the sheet is formed of an improved cellulose fabric comprising cellulose having carboxyl groups chemically bound thereto, wherein the cellulose having carboxyl groups chemically bound thereto is formed in a shape of sheet.

The small animal rearing cage has the floor mat laid upon the floor of the rearing box in such a way that a piece of sheet is folded each other to form folds.

According to the invention, the small animal rearing cage has similar effects as the invention defined in claim 1.

Wherein the "small animals" reared in the small animal rearing cage refers to animals reared as pets or for laboratory use that are fed and evacuates in the cage, As an example of small animals, there are Rodentia including Muridae such as a rat and a hamster; Sciuridae such as a squirrel, a flying squirrel, and a sugar glider; chinchilla and a guinea pig, and Leporidae such as a rabbit. The present invention is preferably applied to the rearing of animals for a laboratory use such as a rat and a mouse in Muridae, and particularly to the rearing of a mouse having a size smaller than a rat.

It is preferable that the small animal rearing cage is provided with feeders for food and water so that the animals can eat and evacuate. Upon rearing the small animals, a nest box is not necessary, however, may be provided in the cage as described above.

The small animal rearing cage has the floor mat as a sheet larger in size than the floor area of the rearing box.

The floor mat can cover entire surface of the floor in the small animal rearing cage so that it is easy for the animals to walk upon the mat and the surface of the mat is prevented from being soiled with their excrement.

### BRIEF DESCRIPTION OF THE DRAWINGS

Fig. 1 shows an elevational view of a small animal rearing cage upon which a floor mat according to the present invention is laid.
Fig. 2 shows a small animal rearing cage in Fig, 1 housing and rearing a mouse.
Fig. 3 shows an elevational view of a small animal rearing cage upon which a plurality of floor mats according to the present Invention are laid.
Fig. 4 shows a difference of the deodorization capacity between a floor mat according to the present invention and other floor mats.
Fig. 5 shows a comparison of the deodorization capacity of the present invention between an unused floor mat and a mat after 2 months use.

### DESCRIPTION OF THE PREFERRED EMBODIMENT

Details of the preferred embodiment of the present invention will be described hereinafter with reference to the drawings in which like reference numerals designate identical or similar elements in each of the several views.

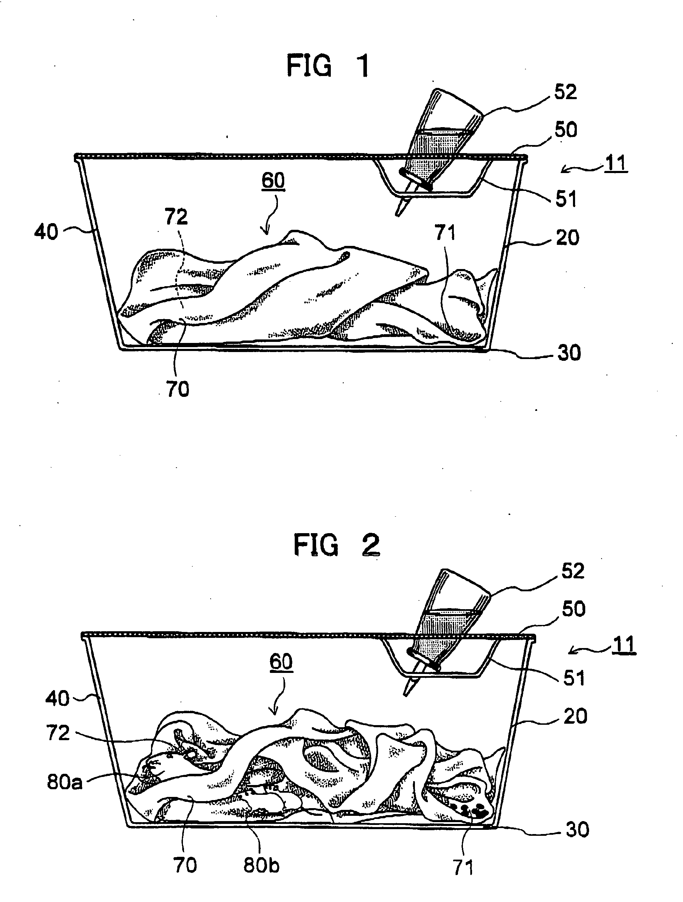

Fig. 1 is an elevational view of a small animal rearing cage 11 upon which a floor mat 60 according to the present invention is laid. The small animal rearing cage 11 is provided with a rearing box 20. The rearing box 20 is made of transparent polycarbonate and comprises a generally rectangle floor 30 and four walls 40 provided almost upright at a circumference of the floor 30. Upon the floor 30 of the rearing box 20, a sheet of floor mat 60 according to the present invention is folded and laid to form folds 70. The upper part of the rearing box 20 is covered with a removable cover 50 made of stainless wire. Upon a part of the cover 50, a recess 51 is formed and a bottle type water feeder 52 is inserted. Behind the water feeder 52, a pellet food (not shown) is provided and the recess 51 is functioned as a food feeder in the present embodiment.

The rearing box 20 according to the present embodiment has an outer dimension of Width 22 cm (W) x Depth 32 cm (D) x Height 13 cm (H). The size of the rearing box 20 is, however, not limited to the above but appropriately selected in a way that small animals can secure a space to sleep and move around freely in accordance with the size and number of target small animals. When rearing 1. to 6 mice, the outer dimension required of the cage may be in a range of Width from 13 to 28 cm (W) x Depth from 20 to 45 cm (D) x Height from 11 to 18 cm (H).

The rearing box 20 is not limited to the one shown In Fig. 1 as long as the floor mat 60 is laid thereupon and the box has a form and material that can house and raise small animals. As for a material of the rearing box 20, plastics, such as polycarbonate, polypropylene, and acrylonitrilebutadienestyrene, metals, woods, or glasses can be used. The shape of the rearing box 20 is not limited to a general rectangular parallelepiped shown in Fig. 1 but may be a shape of a net or stripe that is wholly constituted with metallic wire.

It is preferable for the rearing box 20, particularly for the rearing box 20 shown in Fig. 1 that the floor 30 is flat and the walls 40 are transparent so that the box facilitates easy laying of the floor mat 60, easy observation of the small animals therein, and additionally the animals can move around the box easily.

It is enough for the rearing box 20 to house small animals and the floor mat 60 but it requires no flat walls 40 surrounding the floor mat 30. Instead, a groove or any member that prevents the small animals from escaping from the rearing box 20 is equivalent to the wall 40.

The floor mat 60 according to the present invention will be described hereinafter.

The floor mat 60 have a temperature holding property to a degree that it can hold the body temperature of the small animals who are housed and reared In the rearing box 20, and also have a flexibility to a degree that it can wrap the body of the small animals. The temperature holding property mentioned here should be such a degree that an average skin temperature of 33 degrees C can be kept when a sheet of the floor mat 60 wraps the body of the small animals and keep them at an atmospheric temperature of 21 degrees C with humidity of 50 % and air flow 5 cm / sec at a resting state. The appropriate value of clo of the floor mat 60 is approximately no less than 0.1 clo.

The required flexibility Is such a degree that the floor mat 60 flexibly curves along the shape of the body of the small animals when the mat is covered thereupon. It should be noted that "provided with flexibility" herein means that the sheet type floor mat 60 has such flexibility that the floor mat 60 is not broken at a point where the mat Is folded but keep the seamless state of a sheet. It also has a softness that the folded point is not automatically folded out by way of repulsion of the floor mat 60. The flexibility specified herein is different from the concept that the textile of the floor mat 60 is constituted with soft members in a direction of thickness.

The floor mat 60 having the temperature holding property and flexibility described above includes a sheet, wherein the sheet is formed of an improved cellulose fabric comprising cellulose having carboxyl groups chemically bound thereto, wherein the cellulose having carboxyl groups chemically bound thereto is formed in a shape of sheet. In particular, such fabrics are used because the fabric has more tearing resistance so that it can be prevented from being bitten by the small animals and torn into small pieces, lumps or dusts.

The floor mat 60 according to the present invention has a size that can cover at least the entire abdomen of the small animals. In the small animal rearing cage 11 according to a first embodiment of the present invention shown in Fig. 1, the floor mat 60 is 8.5 times larger than the area of the floor 30 and is laid crumpled and randomly thrown in the rearing box 20. The floor mat 60 laid in such a way are folded randomly and overlapped with one another to form folds 70 with various shapes and sizes. The floor mat 60 is folded and overlapped with each other to form the folds 70 in which the recesses 71 or clearance 72 are formed with a size that can hide a part of the body of the animals. It is preferable that the folds 70 have a size sufficient to hide a part or a half of the body of the small animals. It is also preferable that a plurality of folds 70 is formed.

Fig. 2 shows a plurality of male and female mice 80 reared in the small animal rearing cage 11 shown in Fig. 1, The mouse 80 crawls In the folds 70 or moves the floor mat 60 as appropriate to change the shapes of the folds 70 freely to make the recesses 71 or clearances 72 for their places to sleep (nest) or to evacuate.

Since the floor mat 60 has a flexibility to a degree that it can wrap the body of the small animals and a temperature holding property to a degree that it can hold the body temperature of the small animals, the floor mat 60 of the present invention functions as a bedding material for small animals that can wrap their body and keep their temperature In the rearing box 20. Muridae such as mouse 80 evacuates at fixed place acting on their instinct, so that the place for excrement is determined as such. The excrements are trapped in the ridges and grooves formed on the folds 70. The floor mat 60 as a whole is hardly removed by a mouse moving around the rearing box 20. The present invention, as being different from other mats that use small pieces such as chips for the floor mat, prevents excrements from being spread over the floor 30 as the mouse 80 moves around the cage along with small chips that are adhered with their excrements, thus deterioration of the rearing environment is avoided.

The formation of folds 70 helps mouse 80 to hide themselves in the recesses 71 or clearances 72 in order to avoid exposure to light or external air. The present invention provides mouse 80 a secured living environment that releases the stress from the mouse, therefore increasing their chance of mating and improving fecundity. Conversely, the fecundity of the mouse 80 can be curbed by controlling the flexibility of the floor mat 60, or the number and the area to be laid.

According to the present invention, the mouse 80 can also use the folds 70 to ensure a place for delivery and nursery of their baby animals and thus supplementary floor mat for breeding is not required. The sheet type floor mat 60 of the present invention hardly adheres to the body surface of the baby animals that have no hair. The baby animals can also crawl in the folds 70 to escape from being eaten by the mother animals, and thereby their survival rates are improved. It is preferable that the floor mat 60 is provided with a tearing resistance because the mat is hardly torn off by biting of the mouse 80, and even when torn off, the mat hardly generates small pieces or lumps that adhere easily to the body of the small animals.

The floor mat may have at least a size that can cover the abdomen of the target animals, specifically, a size of approximately 10 cm in every direction In the case where the target animal is a mouse. It is preferable however that the floor mat has a size that is more than just enough to cover the small animals. It is preferable that the mat has a size of, for example, not less than 12 cm in every direction so that the mat can cover the entire body including the head and abdomen of the small animals when they fold their limbs and crouch. It is preferable that when the mat is a sheet having a size of 10 to 15 cm in every direction, a plurality of floor mat is laid in such a way that at least one or two of them are overlapped with one another to form folds.

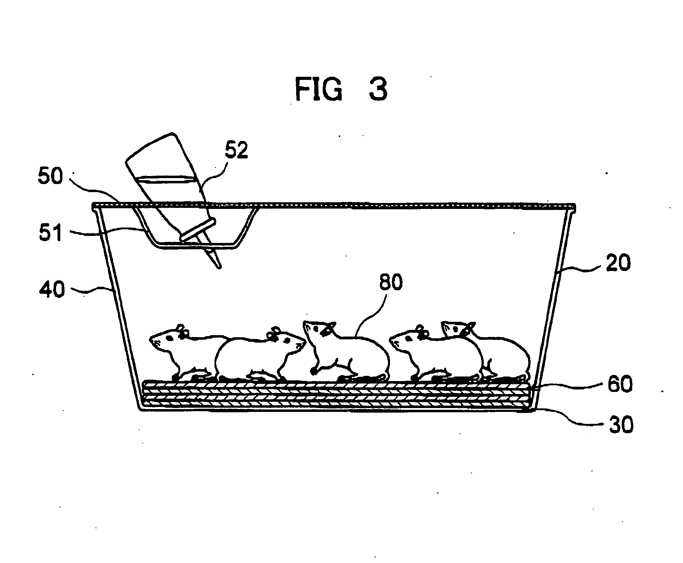

In the present invention, however, it is preferable that the mat has a size that is 1.2 times, more preferably 2 to 15 times, further preferably 3 to 10 times larger than the area of the floor 30 as shown in Fig. 1 and 2. A sheet of the floor mat 60 having such size can cover the entire area of the floor 30 and form folds 70 to prevent the floor 30 from being soiled and to make easy handling. A plurality of floor mats 60 may be laid upon each other as shown in Fig. 3. As the mouse 80 moves around, the floor mat 60 is moved to form folds 70. Upon laying a plurality of floor mats 60, the plurality of floor mats 60 may be overlaid and a part or the entire circumference thereof may be sewn with a thread to unify as long as the formation of folds are secured. The use of a plurality of floor mats 60 can improve the deodorization capacity.

In addition to the temperature holding property and flexibility, it is preferable that the floor mat 60 is provided with water absorption property and deodorization property. In this case, the floor mat 60 absorbs the urine of the small animals and also removes the offensive odor substances such as ammonia and methyl mercaptan contained in excrement and urine, allowing the use of the floor mat 60 for a long period of time.

As for the water absorption property, it is sufficient that the floor mat 60 can hold liquid of no less than 10 % by weight in relation to the weight of the mat; however, it is preferred for the floor mat 60 to hold a liquid of 100 to 300 % by weight in relation to the weight of the mat. And as for the deodorization property, it is preferable to remove offensive odor substance of no less than 1 mg, more preferably 10 mg, and further preferably of no less than 15 mg.

The floor mat 60 provided with the temperature holding property, flexibility, and water absorption and deodorization properties includes a deodorized fabric having such cellulose fibers as cotton, rayon, hemp, and wooden pulp supported by a metal, the deodorized fabric being obtained from an introduction of carboxyl group.

Among above, the deodorized fabric that comprises natural fibers and that is free from chemical substances has fewer detrimental effects on the small animals even when they bite and ingest the fiber. The deodorized fabrics may comprise natural fibers and the improved cellulose fabrics are obtained from the introduction of carboxyl group into cellulose fibers. The improved cellulose fabric that has cellulose fiber supported by polymethacrylate acid is preferable to the chitin- or chitosan-contained deodorized fabric because they show higher deodorization capacity. The deodorization capacity of the improved cellulose fabric is such that 10 to 20 mg of the offensive odor substance per 1 g of improved cellulose can be removed, depending upon the method.

For manufacturing the improved cellulose fabric, such cellulose fiber as cotton fiber, hemp fiber, rayon fiber, and wooden pulp are used as a source material, and chemical reaction process is required for an introduction of the carboxyl group. In order to generate a reaction for an introduction of carboxyl group into cellulose fiber, for example, such methods are employed; a draft polymerization method in which the carboxyl group-contained acrylic acid, methacrylic acid, or polymethacrylic acid are draft polymerized into cellulose; a transformation of the primary hydroxyl group into carboxyl group through catalytic oxidation of cellulose according to the TEMPO methods (leogai Akira, "Magazine for The Society of Fiber Science and Technology" Vol,57, No.6, P-163 (2001)), and a carboxymethylization method by using monochloroacetic acid. Upon introduction and reaction of carboxyl group with the source material, the carboxyl group-introduced cellulose fiber can be spine, or after the spinning of the cellulose fiber, the carboxyl group can be introduced. Carboxyl may further be Introduced into a non-woven fabric to provide a deodorization property. Upon polymerization of methacrylic acid to a cellulose fiber, it is preferable to process in such a way that methacrylic acid is polymerized to have the improved cellulose fiber supported by polymethacrylic acid.

It is preferable that 40 to 140 millimole, more preferably 60 to 120 millimole carboxyl group is contained per 100 g of dried fabric. The carboxyl group -contained within this range shows excellent water absorption and deodorization properties. The improved cellulose fabric having 40 to 140 millimole of carboxyl group per 100 g, for example, is theoretically provided with properties to remove and eliminate the offensive odor that can absorb and decompose 1 to 2 g of ammonia. This means that 1 g of improved cellulose fabric having 40 to 140 millimole of carboxyl group per 100 g has a deodorization property that can remove 10 to 20 mg of offensive odor substance, ammonia. Therefore when such improved cellulose fabrics are used as a floor mat, the mat can be continuously used for as long as 7 to 10 days without being changed and still keeps hygienically excellent rearing environment.

When too much carboxyl is contained in the improved cellulose fabric, the carboxyl introduction reaction requires longer time and increases the amount of use of reagent, and thus leads to higher manufacturing costs. And it further deteriorates functions inherent in cellulose fiber such as water absorption property. On the other hand, when too little carboxyl group is contained, satisfying deodorization property cannot be obtained. Or the contents of carboxyl group can be controlled by a reaction time or an amount of use of the reagent. Or the contents of the carboxyl group can also be controlled by a blending or mixture of fibers, in which one has much carboxyl group and the other has no carboxyl group.

As shown below, when carboxylic acid (COOH) is combined with ammonia (NH₃) that is an offensive odor substance, carboxylate ammonium (COONH₄) is generated in the improved cellulose that is introduced with carboxyl to neutralize and remove the offensive odor substance.

[Formula 1] -COOH + NH₃ -> -COONH₄

The improved cellulose fabric has carboxyl group that neutralizes and absorbs basic offensive odor substances, and is provided with water absorption and temperature holding properties and flexibility that are Inherent in cellulose fiber, and further provided with tearing resistance property to protect the fabric from being bitten by the mouse.

The improved cellulose fabric that is soiled after the use as a floor mat can be washed, and by washing, the deodorization capacity can be recovered to a certain degree. Such improved cellulose fabric is manufactured by blending an improved cotton thread with non-treated cotton thread at a ratio of 1 to 1 by weight. In the improved cotton thread, polymethacrylic acid is introduced to the cellulose fiber by graft polymerization of 10 % by weight of methacrylic acid into cotton fiber, and supported. The improved cellulose fabric (having carboxyl group contents of 70 millimole per 100 g of the floor mat) can be washed as much as 50 times to be used repeatedly. The improved cellulose fabric obtained from an oxidation of cotton fiber (having carboxyl group contents of 62 millimole per 100 g of the floor mat) according to the TEMPO method can also be washed as much as 50 times to be used repeatedly.

It is assumed that the deodorization capacity is recovered by a reaction described below when the improved cellulose fabric is washed with neutral detergent and water or only with water.

[Formula 2] -COONH₄ + H₂O -> -COOH + NH₄OH

On the other hand, when the improved cellulose fabric is washed using alkaline detergent, as shown in below formula, the sodium ion (-Na) dissolved in the contents of the detergent is easily combined with carboxyl group that is substituted to ammonium ion(-NH4).

[Formula 3] -COONH₄ + NaOH-> -COONa + NH₄OH

From a view point of substitution of carboxyl, It is considered to be preferable to use a neutral detergent to wash the improved cellulose fabric, however, an alkaline detergent may also be preferably used to wash the improved cellulose fabric because alkaline detergents show higher detergency than neutral detergents.

In order to obtain higher deodorization capacity, acidic substances such as acetic acid, vinegar, or citrate may be added upon rinsing, It is assumed that when acetic acid (CH3COOH) is added upon rinsing, ammonium ion (NH4) of a carboxyl group is dropped off according to the following chemical reaction and the ammonia deodorization capacity is recovered. It is considered that the deodorization capacity is recovered in proportion to the amount of acetic acid in relation to the fabric weight, not in proportion to the concentration of the acetic acid in the washing water.

[Formula 4] -COONH₄ + CH₃COOH -> -COOH + CH₃COONH₄

### [EXAMPLE]

Examples and Comparisons will be described hereinafter. A sheet of the improved cellulose fabric was randomly crumpled to be rounded by hands and laid upon the rearing box of the small animals rearing cage (hereinafter referred to as a "cage") as shown in Fig. 1. The rearing box used was made of transparent polycarbonate resin having a size of 16 cm in floor width, 26 cm in floor length, and 14 cm in height. The improved cellulose fabric was a form of a towel that blends a 33 % of non-treated cotton thread with a 66 % of cotton thread that have methacrylic acid graft-polymered by 8 % by weight to have polymethacrylic acid supported by cellulose fiber. The size of the improved cellulose fabric was 45 cm in width, 10 cm in length and 120 g in weight. Five cages were prepared for example 1 and comparison 1 respectively and housed in a rearing room that was ventilated about 15 times per hour. A total of six mice with one male and five females were reared in each cage for two months. The top of the rearing cage was covered with a stainless wire cover with a recess provided on a part thereof, and a water feeder as well as pellet food was inserted on the recess. Two sheets of the improved cellulose fabrics were prepared for each of the cage and the sheet was changed once a week. The sheet that had soiled was washed with neutral detergent and used repeatedly. Floor mats were not added even as delivery approached.

At comparison 1, instead of the use of the floor mat, the chip type paper mat having a size of 5 mm in every direction was used but otherwise identical with example 1 and mice were slmilarly reared thereon. Approximately 120 g of chip type floor mat was used in the rearing box at a time and changed once a week. Tissue papers were further added upon delivery of mice.

Upon changing the floor mat, the situation with regard to the spreading of excrement in the rearing box was observed. In the case of Example 1, the excrement of the mice remained accumulated almost at a specific place on the improved cellulose fabric, and the improved cellulose fabric was clean as far as visually observed. On the contrary, in the case of Comparison 1, excrements were scattered over the chip type floor mat and mixed with the chips, and were spread all over the mat.

Concentration of ammonia in the cage was measured by using Kitagawa gas detector (gas detector tube; 105SD & 105SC). In the case of Example 1, the value was 0.1 to 0.6 ppm on the third day after the laying (or changing) of the floor mat and was 2.5 to 6.0 ppm just before the changing of the mat on the seventh day. Whereas in the case of Comparison 1, the value was 0.1 to 0.6 ppm on the third day just as same as Example 1, however the value was up to 12 to 30 ppm on the seventh day.

Semiconductor laser particle counter (KANOMAX, Model 3886 and TF 500) was further employed to measure the number of dust with a size of no less than 0.5 micrometers on the fifth day of rearing in the cage, The value was 4.4 to 5.9 x 10⁵ /m³ in Example 1, and 3.1 to 3.3 x 10⁷ /m³ in Comparison 1. In addition, no accumulation of dust was visually observed around the rearing cage In Example 1 whereas several tens of dust was scattered and accumulation of dust was visually observed around the cage in Comparison 1.

In Example 1, delivery and nursing of the baby mice was carried out utilizing folds. In particular, the baby mice crawled in the valley of the folds were raised there. As a result, in spite of the fact that in Example 1 no floor mats were added further for delivery and nursery, the growth curb of the baby mice were as identical as the result of Comparison 1 in which floor mats were added for the purpose of delivery and nursery. Mother mice killed and ate their baby mice by 20 to 30 percentage less in Example 1 than in Comparison 1. The number of mating of male mice was observed from 8 am to 5 pm every day from the onset of the rearing for duration of 1 to 2 weeks. The number observed was higher in Example 1 with 2 to 4 whereas 0 to 2 in Comparison 1,

As for Example 2, the improved cellulose fabric used in above Example 1; as for Comparison 2, the paper-made floor mat used In above Comparison 1; and as for Comparison 3, a cotton fabric were prepared to observe deodorization property by way of the measurement of the concentration of ammonia. Three mat having 3.5 g in dry weight were placed respectively into a tedlar bag having a size of 25 cm x 40 cm (made by Sun Plastics). Initial ammonia concentration was set to 200 ppm and the container was sealed. The ammonia concentration was measured 1,3,5,10 and 30 minutes after the sealing to observe the deodorization property. The amount of ammonia absorption was 21 mg per 1g In the improved cellulose fabric in Example 1, and 3 mg per 1g in the cotton fabric in Comparison 3.

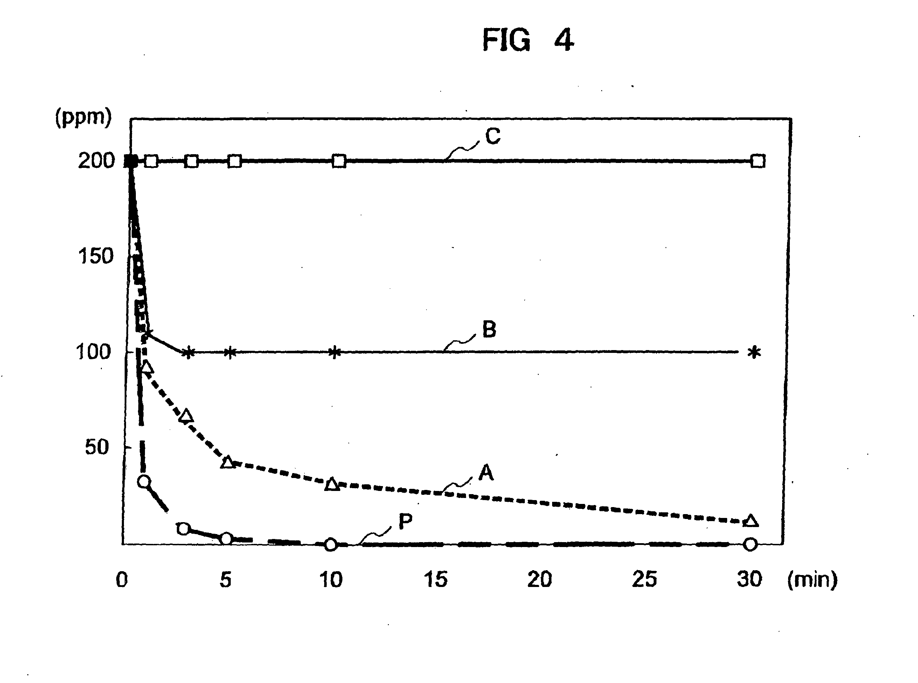

Fig. 4 illustrates a graph showing a test results of Example 2, Comparison 2 and Comparison 3 wherein the ordinate represents residual ammonia concentration (unit: ppm) whereas the abscissa represents elapsed time (unit: minute). The line P, A, B and C respectively shows a change of ammonia concentration in the tedlar bag in the container wherein the line P represents Example 2 wherein the improved cellulose fabric was laid, the line A represents Comparison 2 wherein the paper mat was laid, the line B represents Comparison 3 wherein a cotton fabric was laid, and the line C represents a blank in which no specimen were used.

As shown in Fig. 4, the residual ammonia concentration in the container was hardly detected in Example 2 after five minutes from the beginning of the experiment but on the other hand, Comparison 2 and 3 shown residual ammonia concentration even 10 minutes after the beginning of the experiment.

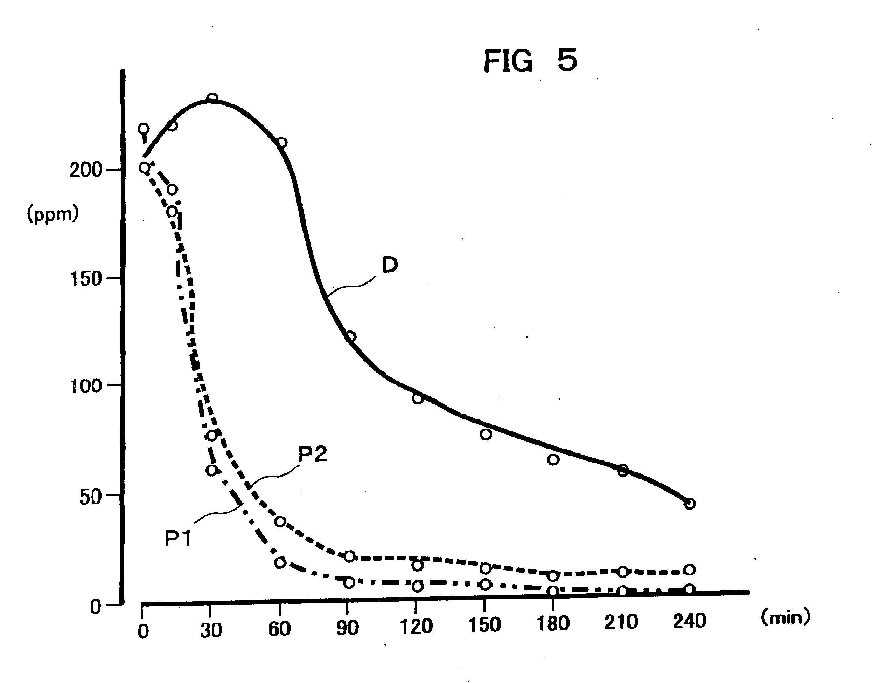

As for Example 3 and Example 4, deodorization capacity was examined by observing the condition of the improved cellulose fabric of Example 1 with one fabric unused and the other fabric used for 2 months. The specimen weighed 120 g in dry weight was laid in the cage of Example 1. Ammonia solution of 50 ml with 1 % concentration was poured in the cage and a change of ammonia concentration was observed. Fig. 5 illustrates the results wherein the ordinate represents residual ammonia concentration (unit: ppm) whereas the abscissa represents elapsed time (unit: minute). The line P1 shows a change of residual ammonia concentration in the cage in which unused improved cellulose fabric was laid as a specimen. The line P2 shows a change of residual ammonia concentration in the cage in which the improved cellulose fabric was laid as a specimen and washed once a week for a period of two months. As for Comparison 4, (new) deodorized floor mat made of paper pulp was laid instead of the improved cellulose fabric of Comparison 2. The change of residual ammonia concentration in the cage was shown with the line D.

As shown in Fig, 5, the change of residual ammonia concentration was almost similar between a new improved cellulose fabric and the improved cellulose fabric that had been used for two months. On the other hand, the deodorized floor mat made of paper pulp shown a poor deodorization capacity compared with the improved cellulose fabric,

Similar tests as above were conducted between two fabrics and similar test results were obtained. The fabric used are: the improved cellulose fabric (having carboxyl group contents of 70 millimole per 100 g of floor mat) that was obtained from a blending of the improved fiber resulted from graft polymerization of 10 % by weight of acrylic acid into a cotton fiber, and non-treated cotton fiber at a ratio of 1 to 1 by weight; and the improved cellulose fabric (having carboxyl group contents of 62 millimole per 100 g of floor mat) that was obtained from the oxidation of a floor mat made of cotton according to the TEMPO method.

### EFFECTS OF THE INVENTION

According to the present invention, a sheet type floor mat having a temperature holding property and flexibility is provided to be laid upon the floor of the small animal rearing cage in such a way that the mat forms folds to cover and hide the body of the animals, and therefore prevents the animals from being exposed to the light and wind and reduces their stress. The sheet type floor mat prevents dust generation, traps excrement at the folds and prevents the excrement to be spread over.

The sheet type floor mat when provided with water absorption and deodorization properties can strongly remove the offensive odor substances such as ammonia that originally generates from excrement and urine of the small animals in a short period of time and therefore can maintain excellent hygienic conditions in the small animal rearing cage and rearing room. Curving the generation of the offensive odor decreases the number of ventilation time for air conditioning, and so an effect is expected of reducing the consumption of the electricity which is caused by exhaustion of heat.

With the improved cellulose fabric having polymethacrylic acid supported by cellulose used as a floor mat, in addition to the effects described above, the mat can recover the water absorption property and a deodorization property by washing and drying of the mat. The improved cellulose fabric can thus be repeatedly used and reduces the total amount of waste disposal.

## Claims

1. A floor mat (60) laid in a small animals rearing cage (11) for housing and rearing small animals, said floor mat is a sheet comprising a temperature holding property to a degree that can keep the body temperature of said small animals, a flexibility to a degree that can wrap the body of said small animals, and a size that covers at least the entire abdomen of said small animals, wherein the sheet is formed of an improved cellulose fabric comprising cellulose having carboxyl groups chemically bound thereto, wherein the cellulose having carboxyl groups chemically bound thereto is formed in a shape of sheet.

2. The floor mat (60) according to Claim 1, wherein the sheet has a water absorption property and deodorization property.

3. The floor mat (60) according to Claim 1 or 2, wherein the sheet has tearing resistance.

4. The floor mat (60) according to Claim 1, 2 or 3, wherein the improved cellulose fabric contains 40 to 140 millimole of carboxyl groups per 100 g of dried fabric.

5. The floor mat (60) according to Claim 1, 2, 3 or 4, wherein the cellulose having carboxyl groups chemically bound thereto is formed with a graft polymerization method.

6. A small animal rearing cage (11) for housing and rearing small animals, said small animal rearing cage comprising: a rearing box (20) having a floor(30) and a wall provided at a circumference of said floor; and a floor mat (60) formed with a sheet having a temperature holding property to a degree that can keep the body temperature of said small animals, a flexibility to a degree that can wrap the body of said small animals, and a size that covers at least the entire abdomen of said small animals, wherein the sheet is formed of an improved cellulose fabric comprising cellulose having carboxyl groups chemically bound thereto, wherein the cellulose having carboxyl groups chemically bound thereto is formed in a shape of sheet.

7. The small animal rearing cage (11) according to Claim 6, wherein said floor mat (60) is laid upon the floor (30) of said rearing box (20) in such a way that a piece of sheet is folded to form folds (70).

8. The small animal rearing cage (11) according to Claim 6 or 7, wherein said floor mat (60) is a sheet larger in size than the floor area of said rearing box (20).

9. The small animal rearing cage (11) according to Claim 6, 7 or 8, wherein the improved cellulose fabric contains 40 to 140 millimole of carboxyl groups per 100 g of dry fabric.

10. The small animal rearing cage (11) according to Claim 6, 7, 8 or 9, wherein the cellulose having carboxyl groups chemically bound thereto is formed with a graft polymerization method.

## Patentansprüche

1. Bodenmatte (60), verlegt in einem Zuchtkäfig für kleine Tiere (11), zur Unterbringung und Aufzucht von kleinen Tieren, wobei die Bodenmatte eine Vorlage ist, umfassend eine solche Eigenschaft zur Aufrechterhaltung der Temperatur, dass die Körpertemperatur der kleinen Tiere aufrechterhalten werden kann, eine solche Flexibilität, dass der Körper der kleinen Tiere eingewickelt werden kann, und eine solche Größe, dass mindestens das gesamte Abdomen der kleinen Tiere bedeckt ist, wobei die Vorlage aus einem verbesserten Cellulosegewebe gebildet ist, umfassend Cellulose mit chemisch daran gebundenen Carboxylgruppen, wobei die Cellulose mit chemisch daran gebundenen Carboxylgruppen in Form einer Vorlage gebildet ist.

2. Bodenmatte (60) gemäß Anspruch 1, wobei die Vorlage eine Wasserabsorptionseigenschaft und eine desodorierende Eigenschaft aufweist.

3. Bodenmatte (60) gemäß Anspruch 1 oder 2, wobei die Vorlage eine Reißfestigkeit aufweist.

4. Bodenmatte (60) gemäß Anspruch 1, 2 oder 3, wobei das verbesserte Cellulosegewebe 40 bis 140 Millimol Carboxylgruppen pro 100 g getrocknetem Gewebe enthält.

5. Bodenmatte (60) gemäß Anspruch 1, 2, 3 oder 4, wobei die Cellulose mit chemisch daran gebundenen Carboxylgruppen durch ein Pfropfpolymerisationsverfahren gebildet ist.

6. Zuchtkäfig für kleine Tiere (11) zur Unterbringung und Aufzucht von kleinen Tieren, wobei der Zuchtkäfig für kleine Tiere umfasst: eine Zuchtbox (20) mit einem Boden (30) und einer Wand, am Umfang des Bodens vorgesehen; und eine Bodenmatte (60), gebildet mit einer Vorlage mit einer solchen Eigenschaft, dass die Körpertemperatur der kleinen Tiere aufrechterhalten werden kann, einer solchen Flexibilität, dass der Körper der kleinen Tiere eingewickelt werden kann, und einer Größe, dass mindestens das gesamte Abdomen der kleinen Tiere bedeckt ist, wobei die Vorlage aus einem verbesserten Cellulosegewebe gebildet ist, umfassend Cellulose mit chemisch daran gebundenen Carboxylgruppen, wobei die Cellulose mit chemisch daran gebundenen Carboxylgruppen in Form einer Vorlage gebildet ist.

7. Zuchtkäfig für kleine Tiere (11) gemäß Anspruch 6, wobei die Bodenmatte (60) so auf dem Boden (30) der Zuchtbox (20) verlegt ist, dass ein Stück der Vorlage gefaltet ist, um Falten (70) zu bilden.

8. Zuchtkäfig für kleine Tiere (11) gemäß Anspruch 6 oder 7, wobei die Bodenmatte (60) eine Vorlage ist, die größer als die Bodenfläche der Zuchtbox (20) ist.

9. Zuchtkäfig für kleine Tiere (11) gemäß Anspruch 6, 7 oder 8, wobei das verbesserte Cellulosegewebe 40 bis 140 Millimol Carboxylgruppen pro 100 g getrocknetem Gewebe enthält.

10. Zuchtkäfig für kleine Tiere (11) gemäß Anspruch 6, 7, 8 oder 9, wobei die Cellulose mit chemisch daran gebundenen Carboxylgruppen durch ein Pfropfpolymerisationsverfahren gebildet ist.

## Revendications

1. Tapis de sol (60) disposé dans une cage d'élevage pour petits animaux (11) pour abriter et élever de petits animaux, ledit tapis de sol étant une feuille ayant une propriété de stabilisation de la température à un degré permettant de stabiliser la température corporelle desdits petits animaux, une souplesse à un degré permettant d'envelopper le corps desdits petits animaux, et une taille qui recouvre au moins tout l'abdomen desdits petits animaux, dans lequel la feuille est constituée d'une tissu cellulosique amélioré comprenant de la cellulose ayant des groupes carboxyles chimiquement liés à celle-ci, dans lequel la cellulose ayant des groupes carboxyles chimiquement liés à celle-ci est produite sous la forme d'une feuille.

2. Tapis de sol (60) selon la revendication 1, dans lequel la feuille a une propriété d'absorption de l'eau et une propriété désodorisante.

3. Tapis de sol (60) selon la revendication 1 ou 2, dans lequel la feuille a une résistance au déchirement.

4. Tapis de sol (60) selon la revendication 1, 2 ou 3, dans lequel le tissu cellulosique amélioré contient 40 à 140 millimoles de groupes carboxyles pour 100 g de tissu sec.

5. Tapis de sol (60) selon la revendication 1, 2, 3 ou 4, dans lequel la cellulose ayant des groupes carboxyles chimiquement liés à celle-ci est produite selon une méthode de polymérisation par greffage.

6. Cage d'élevage pour petits animaux (11) pour abriter et élever de petits animaux, ladite cage d'élevage pour petits animaux comprenant : une boîte d'élevage (20) ayant un sol (30) et une paroi disposée à une certaine circonférence dudit sol ; et un tapis de sol (60) constitué d'une feuille ayant une propriété de stabilisation de la température à un degré permettant de stabiliser la température corporelle desdits petits animaux, une souplesse à un degré permettant d'envelopper le corps desdits petits animaux, et une taille qui recouvre au moins tout l'abdomen desdits petits animaux, dans lequel la feuille est constituée d'une tissu cellulosique amélioré comprenant de la cellulose ayant des groupes carboxyles chimiquement liés à celle-ci, dans lequel la cellulose ayant des groupes carboxyles chimiquement liés à celle-ci est produite sous la forme d'une feuille.

7. Cage d'élevage pour petits animaux (11) selon la revendication 6, dans laquelle ledit tapis de sol (60) est disposé sur le sol (30) de ladite boîte d'élevage (20) de telle sorte qu'un morceau de feuille est plié pour former des plis (70).

8. Cage d'élevage pour petits animaux (11) selon la revendication 6 ou 7, dans laquelle ledit tapis de sol (60) est une feuille de taille plus grande que la surface au sol de ladite boîte d'élevage (20).

9. Cage d'élevage pour petits animaux (11) selon la revendication 6, 7 ou 8, dans laquelle le tissu cellulosique amélioré contient 40 à 140 millimoles de groupes carboxyles pour 100 g de tissu sec.

10. Cage d'élevage pour petits animaux (11) selon la revendication 6, 7, 8 ou 9, dans laquelle la cellulose ayant des groupes carboxyles chimiquement liés à celle-ci est produite selon une méthode de polymérisation par greffage.
